# EUROPEAN PATENT APPLICATION

(11) **EP 4 503 771 A1**
(43) Date of publication of application: **05.02.2025**
(21) Application number: 22935490.7
(22) Date of filing: 31.03.2022
(51) Int. Cl.: H04W 56/00, H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/016751
(87) International publication number: WO 2023/188349

(57) **Abstract**

A terminal according to one aspect of the present disclosure includes a receiving section that receives information related to timing advance groups corresponding to a plurality of transmission/reception points of a specific cell, and a control section that, when the plurality of transmission/reception points belong to a same timing advance group, controls respective timing advances for the plurality of transmission/reception points, based on a timing advance command corresponding to only one transmission/reception point or a timing advance command corresponding to a plurality of transmission/reception points.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, radio communication systems later than Rel. 16/5G), it is assumed that communication using a plurality of transmission/reception points (for example, multi-TRP (MTRP)) is controlled in a serving cell or that communication is controlled based on inter-cell mobility including a non-serving cell.

However, when UL transmission to the plurality of transmission/reception points is performed, how to perform control of the UL transmission (for example, control of a timing advance and the like) is an issue. Unless UL transmission to each transmission/reception point is appropriately controlled, quality of communication using the plurality of transmission/reception points may deteriorate.

The present disclosure has been made in view of such points, and an object of the present disclosure is to provide a terminal, a radio communication method, and a base station that can appropriately perform communication even when communication is performed by using a plurality of transmission points.

### Solution to Problem

A terminal according to one aspect of the present disclosure includes a receiving section that receives information related to timing advance groups corresponding to a plurality of transmission/reception points of a specific cell, and a control section that, when the plurality of transmission/reception points belong to a same timing advance group, controls respective timing advances for the plurality of transmission/reception points, based on a timing advance command corresponding to only one transmission/reception point or a timing advance command corresponding to a plurality of transmission/reception points.

### Advantageous Effects of Invention

According to one aspect of the present disclosure, it is possible to appropriately perform communication even when communication is performed by using a plurality of transmission points.

### Brief Description of Drawings

[FIG. 1] FIGS. 1A to 1D are diagrams to show examples of multi-TRP.
[FIG. 2] FIGS. 2A and 2B are diagrams to show examples of inter-cell mobility.
[FIG. 3] FIG. 3 is a diagram to show an example of a timing advance group (TAG) to which a cell included in a cell group belongs.
[FIG. 4] FIG. 4 is a diagram to show an example of a MAC CE for timing advance command.
[FIG. 5] FIG. 5 is a diagram to show an example of a case where a plurality of TRPs corresponding to a serving cell belong to different TAGs.
[FIG. 6] FIG. 6 is a diagram to show an example of TAG configuration according to a first embodiment.
[FIG. 7] FIGS. 7A and 7B are diagrams to show other examples of the TAG configuration according to the first embodiment.
[FIG. 8] FIG. 8 is a diagram to show an example of operation after expiration of a time alignment timer according to the first embodiment.
[FIG. 9] FIG. 9 is a diagram to show another example of the operation after expiration of the time alignment timer according to the first embodiment.
[FIG. 10] FIGS. 10A and 10B are diagrams to show examples of operation after expiration of a time alignment timer according to a second embodiment.
[FIG. 11] FIG. 11 is a diagram to show an example of TAG configuration according to a third embodiment.
[FIG. 12] FIG. 12 is a diagram to show an example of TAG configuration according to a fourth embodiment.
[FIG. 13] FIG. 13 is a diagram to show an example of a schematic structure of a radio communication system according to one embodiment.
[FIG. 14] FIG. 14 is a diagram to show an example of a structure of a base station according to one embodiment.
[FIG. 15] FIG. 15 is a diagram to show an example of a structure of a user terminal according to one embodiment.
[FIG. 16] FIG. 16 is a diagram to show an example of a hardware structure of the base station and the user terminal according to one embodiment.
[FIG. 17] FIG. 17 is a diagram to show an example of a vehicle according to one embodiment.

### Description of Embodiments

### (TCI, Spatial Relation, QCL)

For NR, it is studied that reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE are controlled based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be used interchangeably with sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a demodulation reference signal (DMRS), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID), or may correspond to different cell IDs. The cell ID may be a physical cell ID (for example, a PCI) or a virtual cell ID.

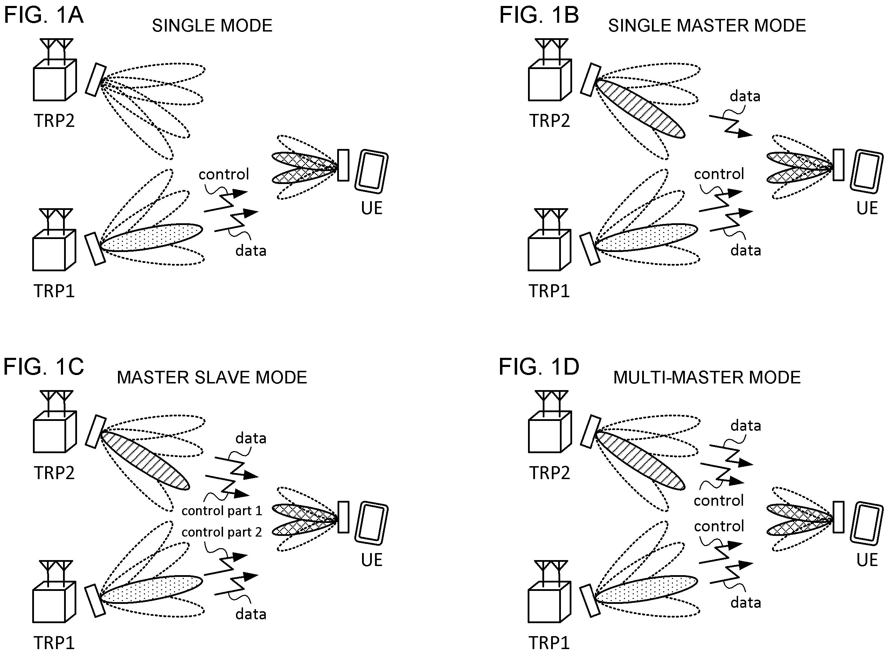

FIGS. 1A to 1D are diagrams to show examples of a multi-TRP scenario. In these examples, it is assumed that each TRP can transmit four different beams, but this is not restrictive.

FIG. 1A shows an example of a case where only one TRP (in the present example, TRP 1) of the multi-TRP performs transmission to the UE (which may be referred to as a single mode, a single TRP, or the like). In this case, TRP 1 transmits, to the UE, both a control signal (PDCCH) and a data signal (PDSCH).

FIG. 1B shows an example of a case where only one TRP (in the present example, TRP 1) of the multi-TRP transmits a control signal to the UE and where the multi-TRP transmits data signals (which may be referred to as a single master mode). The UE receives respective PDSCHs transmitted from the multi-TRP, based on one piece of downlink control information (DCI).

FIG. 1C shows an example of a case where each TRP of the multi-TRP transmits part of a control signal to the UE and where the multi-TRP transmits data signals (which may be referred to as a master slave mode). Part 1 of the control signal (DCI) may be transmitted in TRP 1, and part 2 of the control signal (DCI) may be transmitted in TRP 2. Part 2 of the control signal may depend on part 1. The UE receives, based on these parts of the DCI, respective PDSCHs transmitted from the multi-TRP.

FIG. 1D shows an example of a case where each TRP of the multi-TRP transmits a separate control signal to the UE and where the multi-TRP transmits data signals (which may be referred to as a multi-master mode). A first control signal (DCI) may be transmitted in TRP 1, and a second control signal (DCI) may be transmitted in TRP 2. The UE receives, based on the DCIs, respective PDSCHs transmitted from the multi-TRP.

When such plurality of PDSCHs (which may be referred to as multi-PDSCH (multiple PDSCHs)) from the multi-TRP as that shown in FIG. 1B are scheduled by using one piece of DCI, the DCI may be referred to as single DCI (S-DCI, single PDCCH). When such plurality of PDSCHs from the multi-TRP as that shown in FIG. 1D are scheduled by using multiple DCIs respectively, the multiple DCIs may be referred to as multi-DCI (M-DCI, multi-PDCCH (multiple PDCCHs)).

From respective TRPs of the multi-TRP, different transport blocks (TBs) / codewords (Code words (CWs)) / different layers may be transmitted. Alternatively, from respective TRPs of the multi-TRP, the same TB/CW/layer may be transmitted.

As one form of the multi-TRP transmission, non-coherent joint transmission (NCJT) is under study. In NCJT, for example, TRP 1 performs modulation mapping on a first codeword, performs layer mapping, and transmits a first PDSCH in a first number of layers (for example, two layers) by using first precoding. TRP 2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be used interchangeably with simultaneous reception of PDSCHs of a QCL type other than a certain QCL type (for example, QCL type D).

For URLLC for multi-TRP, it is studied that PDSCH (transport block (TB) or codeword (CW)) repetition over multi-TRP is supported. It is studied that schemes for repetition over multi-TRP on a frequency domain, a layer (space) domain, or a time domain (URLLC schemes, for example, schemes 1, 2a, 2b, 3, and 4) are supported. In scheme 1, multi-PDSCH from the multi-TRP is space division multiplexed (SDMed). In schemes 2a and 2b, PDSCHs from the multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from the multi-TRP is time division multiplexed (TDMed). In scheme 3, multi-PDSCH from the multi-TRP is transmitted in one slot. In scheme 4, multi-PDSCH from the multi-TRP is transmitted in different slots.

According to such a multi-TRP scenario, more flexible transmission control using a high quality channel is available.

There is a possibility that NCJT using multi-TRP/multi-panel uses a high rank. For supporting ideal and non-ideal backhaul between a plurality of TRPs, both single DCI (single PDCCH, for example, FIG. 1B) and multi-DCI (multi-PDCCH, for example, FIG. 1D) may be supported. For both of the single DCI and the multi-DCI, the maximum number of TRPs may be two.

For single PDCCH design (for ideal backhaul, mainly), TCI enhancement is under study. Each TCI codepoint in DCI may correspond to one or two TCI states. A TCI field size may be the same as that of Rel. 15.

With respect to a PDCCH/CORESET defined in Rel. 15, one TCI state without a CORESET pool index (CORESETPoolIndex) (which may be referred to as TRP information (TRP Info)) is configured for one CORESET.

With respect to enhancement of a PDCCH/CORESET defined in Rel. 16, a CORESET pool index is configured for each CORESET in multi-TRP based on multi-DCI.

### (Inter-cell Mobility)

For NR, it is studied that one or a plurality of transmission/reception points (TRPs) (multi-TRP (MTRP)) perform DL transmission to the UE. It is also studied that the UE performs UL transmission to the one or plurality of TRPs.

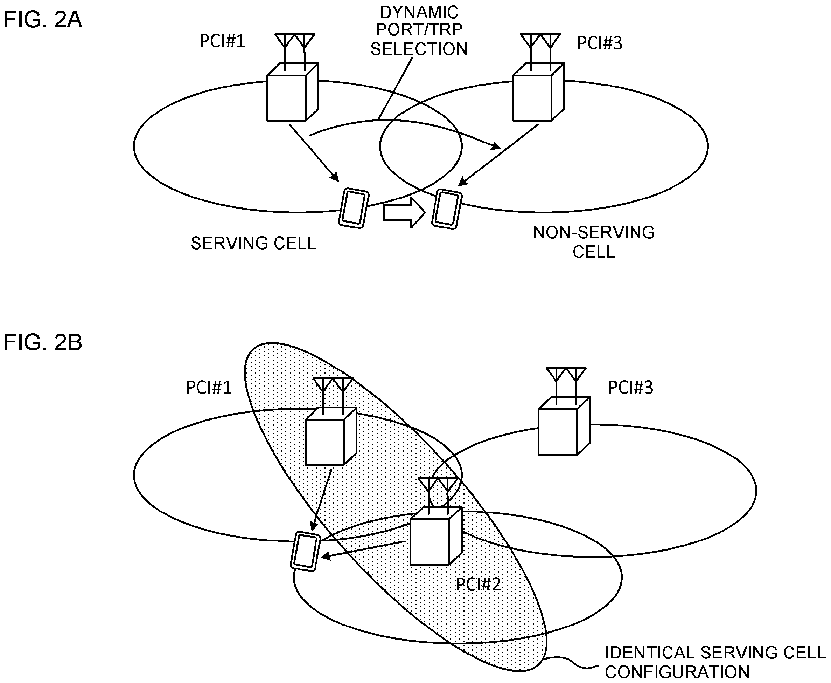

It is conceivable that the UE receives channels/signals from a plurality of cells/TRPs in inter-cell mobility (for example, L1/L2 inter cell mobility) (see FIGS. 2A and 2B).

FIG. 2A shows an example of the inter-cell mobility including a non-serving cell (for example, Single-TRP inter-cell mobility). The UE may be configured with one TRP (or single TRP) in each cell. FIG. 2A shows a case where the UE receives channels/signals from a base station / TRP in cell #1 serving as a serving cell and a base station / TRP in cell #3 not serving as a serving cell (serving as a non-serving cell). For example, the case corresponds to a case where the UE switches from cell #1 to cell #3 (for example, fast cell switch). The TRP in the serving cell may be referred to as a primary TRP (for example, a pTRP). The TRP in the non-serving cell may be referred to as an additional TRP (aTRP).

In this case, selection of a port (for example, an antenna port) / TRP may be performed dynamically. Selection of a port (for example, an antenna port) / TRP may be performed based on a TCI state indicated or updated by DCI / MAC CE. FIG. 2A shows a case where configuration of different physical cell IDs (for example, PCIs) is supported for cell #1 and cell #3.

FIG. 2B shows an example of a multi-TRP scenario (for example, inter-cell mobility in a case of using multi-TRP (Multi-TRP inter-cell mobility)). The UE may be configured with a plurality of (for example, two) TRPs (or different CORESET pool indices) in each cell. FIG. 2B shows a case where the UE receives channels/signals from TRP #1 and TRP #2. FIG. 2B shows a case where TRP #1 and TRP #2 correspond to a physical cell ID (PCI) #1 and PCI #2, respectively.

The multi-TRP (TRPs #1 and #2) may be connected to each other by an ideal/non-ideal backhaul, and information, data, and the like may be exchanged. From respective TRPs of the multi-TRP, the same or different codewords (Code words (CWs)) and the same or different layers may be transmitted. As shown in FIG. 2B, non-coherent joint transmission (NCJT) may be used as one form of the multi-TRP transmission. FIG. 2B shows a case where NCJT is performed between TRPs corresponding to different PCIs. Note that the same serving cell configuration may be applied to / configured for TRP #1 and TRP #2.

A plurality of PDSCHs (multi-PDSCH) transmitted by NCJT may be defined to partially or entirely overlap in terms of at least one of the time and frequency domains. In other words, a first PDSCH from TRP #1 and a second PDSCH from TRP #2 may overlap in terms of at least one of the time and frequency resources. The first PDSCH and the second PDSCH may be used for transmission of the same TB, or may be used for transmission of different TBs.

The first PDSCH and the second PDSCH may be assumed not to be in a quasi-co-location (QCL) relationship (not to be quasi-co-located). Reception of the multi-PDSCH may be used interchangeably with simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI), single PDCCH) (single master mode). The one piece of DCI may be transmitted from one TRP of the multi-TRP. A configuration using one piece of DCI in multi-TRP may be referred to as single-DCI based multi-TRP (mTRP/MTRP).

A plurality of PDSCHs from the multi-TRP may be scheduled by using multiple DCIs (multi-DCI (M-DCI), multi-PDCCH (multiple PDCCHs)) (multi-master mode) respectively. The multiple DCIs may be transmitted from the multi-TRP respectively. A configuration using multiple DCIs in multi-TRP may be referred to as multi-DCI based multi-TRP (mTRP/MTRP).

The UE may assume that, for different TRPs, separate CSI reports related to the respective TRPs are transmitted. Such CSI feedback may be referred to as separate feedback, separate CSI feedback, and the like. In the present disclosure, "separate" may be used interchangeably with "independent."

In Rel-17 NR (or later versions), it is assumed that a MAC CE / DCI supports beam indication for a TCI state associated with a different PCI. In Rel-18 NR (or later versions), it is assumed that a MAC CE / DCI supports indication of serving cell change to a cell having a different PCI.

### (Timing Advance Group)

Using a plurality of TRPs also leads to a case where distances between the UE and the respective TRPs are different from each other. The plurality of TRPs may be included in the same cell (for example, a serving cell). Alternatively, a certain TRP of the plurality of TRPs may correspond to a serving cell, and another TRP may correspond to a non-serving cell. In this case, it is also assumed that distances between the respective TRPs and the UE are different from each other.

In existing systems, a transmission timing of a UL (Uplink) channel and/or a UL signal (UL channel/signal) is adjusted by a timing advance (TA). Reception timings of UL channels/signals from different user terminals (UEs) are adjusted by a radio base station (also referred to as a TRP (Transmission and Reception Point), a gNB (gNodeB), or the like) side.

The UE may control a timing of UL transmission by applying a timing advance (multiple timing advances) per timing advance group (TAG) configured in advance.

In a case of applying the multiple timing advances, a timing advance group (TAG) classified by a transmission timing is supported. The UE may control a UL transmission timing in each TAG by assuming that the same TA offset (or TA value) is applied per TAG. In other words, TA offset may be independently configured for each TAG.

In a case of applying the multiple timing advances, the UE independently adjusts a transmission timing in a cell belonging to each TAG, thereby allowing reception timings of uplink signals from the UE to be adjusted in a radio base station even when a plurality of cells are used.

The TAG (for example, serving cells belonging to the same TAG) may be configured by a higher layer parameter. The same timing advance value may be applied to serving cells belonging to the same TAG. A timing advance group including an SpCell for a MAC entity may be referred to as a primary timing advance group (PTAG), and a TAG other than the PTAG may be referred to a secondary timing advance group (STAG).

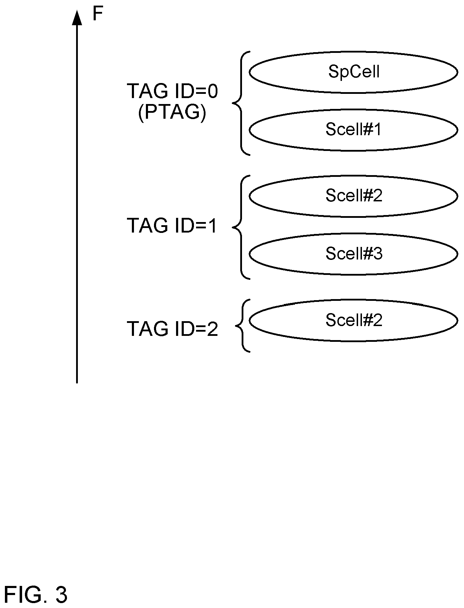

In an existing system (for example, Rel-16 NR), configuration of up to four TAGs is supported per cell group (for example, MCG/SCG) (see FIG. 3). FIG. 3 shows a case where three TAGs are configured for a cell group including an SpCell and SCells #1 to #4. FIG. 3 shows a case where the SpCell and SCell #1 belong to a first TAG (PTAG or TAG #0), SCell#2 and SCell#3 belong to a second TAG (TAG #1), and SCell #4 belongs to a third TAG (TAG #2).

A timing advance command (TA command) may be notified to the UE by using a MAC control element (for example, a MAC CE). The TA command is a command indicating a transmission timing value of an uplink channel, and is included in the MAC control element. The TA command is signaled at a MAC layer from the radio base station to the UE. The UE controls a given timer (for example, a TA timer), based on reception of the TA command.

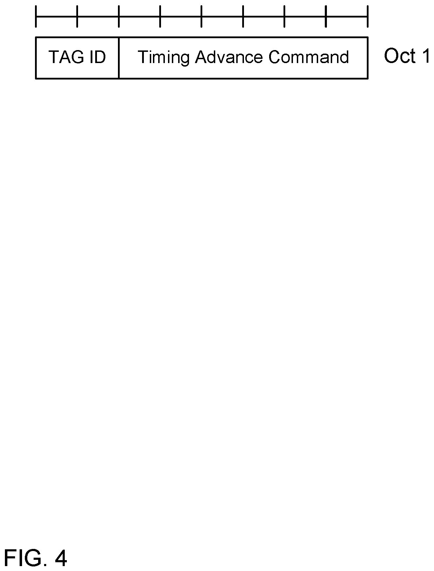

The MAC CE for the timing advance command (TAC MAC CE) may include a field for a timing advance group index (for example, a TAG ID) and a field for a timing advance command (see FIG. 4).

On the other hand, in future radio communication systems, a case is assumed that different TAGs (or TAG-IDs) are configured for one or more TRPs corresponding to a certain cell (or CC). Alternatively, a case is also assumed that different TRPs corresponding to a certain cell share a common TAG. Alternatively, a case that a MAC CE for TA command is applied to only one TRP or a case that a MAC CE for TA command is applied to a plurality of TRPs is also assumed.

Alternatively, it is also assumed that, in inter-cell mobility, UL transmission is controlled based on a timing advance, for a serving cell (or a TRP of the serving cell) and a non-serving cell (or a TRP of the non-serving cell).

As described above, in MIMO in Rel. 18 (or later versions), it is also assumed that two timing advances (TAs) for two TRPs are supported in multi-TRP operation using multi-DCI.

When a TAG is configured per TRP, a time alignment timer (for example, timeAlignmentTimer) may configured for each TRP. The time alignment timer may control a time at which a MAC entity assumes that a serving cell belonging to an associated TAG is uplink time aligned. For example, the time alignment timer may be configured by RRC for maintaining (for example, maintenance) UL time alignment.

A time alignment timer (for example, timeAlignmentTimer) may be maintained for UL time alignment. In Rel. 17, a time alignment timer (for example, timeAlignmentTimer) corresponds to each TAG. When receiving a MAC CE for timing advance command (for example, a TAC MAC CE), the UE starts or restarts time alignment timers associated with respective indicated timing advance groups (for example, TAGs).

When the TAC MAC CE is received and a given value (N_{TA}) is maintained with the indicated TAG, the MAC entity applies a timing advance command for the indicated TAG, or starts or restarts the time alignment timer associated with the indicated TAG. The given value (N_{TA}) may be a timing advance between DL and UL.

Operation in a case where the time alignment timer has expired may be defined separately for each of the PTAG and the STAG. Note that a timing advance group (TAG) including an SpCell for the MAC entity may be referred to as a primary timing advance group (PTAG), and a TAG other than the PTAG may be referred to a secondary timing advance group (STAG).

For example, Rel. 17 supports application of given PTAG operation in a case where a timing advance timer corresponding to a PTAG has expired, and application of given STAG operation in a case where a timing advance timer corresponding to a STAG has expired.

For example, when the time alignment timer has expired, the following operation (for example, given PTAG operation / given STAG operation) may be performed.

### {Given PTAG Operation}

When the time alignment timer is associated with a PTAG,
- Flush all the HARQ buffers in all the serving cells.
- Notify RRC of indication of release of PUCCHs for all the serving cells, if configured.
- Notify RRC of indication of release of an SRS, if configured.
- Clear all the configured DL and UL assignments.
- Clear PUSCH resources for semi-persistent CSI reporting.
- Cause all the running time alignment timers to expire.
- Maintain N_{TA} of all the TAGs.

### {Given STAG Operation}

When the time alignment timer is associated with an STAG, for all the serving cells belonging to the TAG
- Flush all the HARQ buffers.
- Notify RRC of indication of release of a PUCCH, if configured.
- Notify RRC of indication of release of an SRS, if configured.
- Clear all the configured DL and UL assignments.
- Clear PUSCH resources for semi-persistent CSI reporting.
- Maintain N_{TA} of the TAG.

### <TA Control per TRP / Panel>

As described above, when communication is performed by using a plurality of transmission/reception points (for example, TRPs) / panels, it is also assumed that a timing advance is controlled for each TRP/ each panel.

For example, a TA may be applied for each TRP (alternatively, indication per TRP TA may be performed). For example, at least one of the following options may be applied.

### {Option 1}

A different TAG-ID may be configured for each TRP, and a different MAC CE for TA command may be configured for each TRP. Each TAG may maintain a time alignment timer for UL time alignment.

### {Option 2}

Different TRPs may share a TAG. A MAC CE for TA command may be applied to only one TRP. The UE applies a different TA to another TRP. For example, the UE may adjust, based on a TA for TRP #0 (TA_TRP #0), a TA value for another TRP (for example, TRP #1) by using TA offset (TA_TRP_offset).

In this case, only one time alignment timer may be present for UL time alignment for the plurality of TRPs. This may mean that the UL time alignment for the plurality of TRPs is maintained or lost simultaneously.

### {Option 3}

One TAG may be present. A MAC CE for TA command may be applied to a plurality of serving TRPs for the UE.

### {Option 4}

One TAG may be present. A MAC CE for TA command received on a TRP / CW / PDSCH / DMRS port group may be applied to the same TRP / CW / PDSCH / DMRS port group of the TAG. Each TRP / CW / PDSCH / DMRS port group of the TAG maintains a time alignment timer for UL time alignment.

### (Analysis 1)

Assume a case where a plurality of (for example, two) TRPs of a serving cell belong to different TAGs. In Rel. 17, a TAG including an SpCell for a MAC entity corresponds to a PTAG, and the other TAG corresponds to an STAG. Respective operations for the PTAG and the STAG in expiration of a time alignment timer are defined to be different from each other.

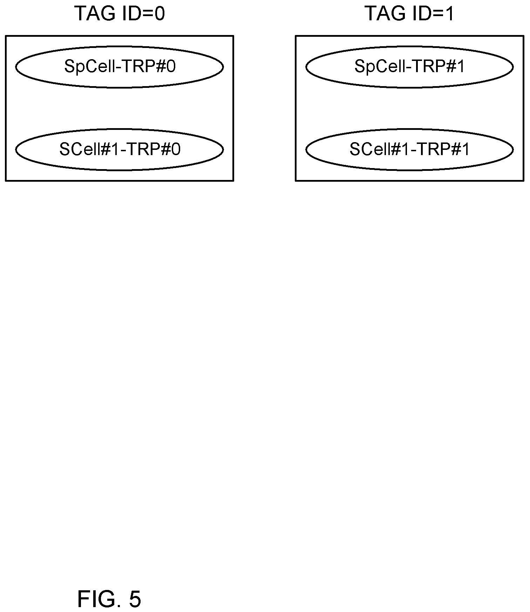

However, in Rel. 18 (or later versions), a case is also conceivable that two TRPs of the SpCell belonging to different TAGs (for example, TAG ID #0 and TAG ID #1) are supported (see FIG. 5). Such a case causes an issue related to how to control operation based on a time alignment timer for each TAG (for example, operation in a case where the time alignment timer has expired).

FIG. 5 shows a case where TRP #0 of the SpCell and TRP #0 of SCell #1 belong to the same TAG group (TAG ID #0), and TRP #1 of the SpCell and TRP #1 of SCell #1 belong to the same TAG group (TAG ID #1). This case causes an issue related to which TAG corresponds to a PTAG or how to control UE operation in each TAG in expiration of a time alignment timer.

### (Analysis 2)

Assume a case where a plurality of (for example, two) TRPs of a serving cell belong to the same TAG and where a MAC CE for timing advance command (TAC MAC CE) is applied/indicated for only one TRP. For example, the UE may apply the TAC MAC CE to only one TRP to adjust a timing advance (for example, TA_0) for the TRP, and may use offset based on TA_0 to adjust/control a timing advance (for example, TA_1) for another TRP. TA_1 may be obtained, for example, by TA_0 + offset. The offset may be indicated from the base station to the UE by using RRC / MAC CE / DCI.

This case causes an issue related to whether a time alignment timer is supported for each TRP or whether the timer is started/restarted based on indication of offset.

### (Analysis 3)

Assume a case where a plurality of (for example, two) TRPs of a serving cell belong to the same TAG and where a MAC CE for timing advance command (TAC MAC CE) indicates a TAC for each TRP. In this case, each TRP maintains a time alignment timer.

Such a case causes an issue related to how to control UE operation for each TRP in a case where the time alignment timer has expired.

### (Analysis 4)

Assume a case where a plurality of (for example, two) TRPs of a serving cell belong to the same TAG and where a MAC CE for timing advance command (TAC MAC CE) indicates a TAC for each TRP. In this case, each TRP maintains a time alignment timer.

Such a case causes an issue related to whether a plurality of TRPs from a plurality of cells can share the same TA command / same time alignment timer, or TAG configuration in a case where the plurality of TRPs can share the same TA command / same time alignment timer.

The inventors of the present invention focused on Analyses 1 to 4 in a case where a plurality of TRPs/panels are used, studied control of a timing advance for at least one of Analyses 1 to 4 (for example, timing advance adjustment / TAG configuration / operation based on a timing advance timer and the like), and came up with the idea of the present embodiment.

Embodiments according to the present disclosure will be described in detail with reference to the drawings as follows. The radio communication methods according to respective embodiments may each be employed individually, or may be employed in combination.

Note that in the present disclosure, "A/B" may mean "at least one of A and B," and may be used interchangeably with A and B, or A or B. In the present disclosure, "A/B/C" may mean "at least one of A, B, and C," and may be used interchangeably with A, B, and C, or A, B, or C.

In the present disclosure, a cell, a serving cell, a CC, a carrier, a BWP, a DL BWP, a UL BWP, an active DL BWP, an active UL BWP, and a band may be used interchangeably. In the present disclosure, an index, an ID, an indicator, and a resource ID may be used interchangeably. In the present disclosure, "support," "control," "controllable," "operate," and "operable" may be used interchangeably.

In the present disclosure, configuration (configure), activation (activate), update, indication (indicate), enabling (enable), specification (specify), and selection (select) may be used interchangeably.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be used interchangeably.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a panel, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be used interchangeably. In the present disclosure, a QCL type X-RS, a DL-RS associated with QCL type X, a DL-RS having QCL type X, a DL-RS source, an SSB, a CSI-RS, and an SRS may be used interchangeably.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be used interchangeably. A panel Identifier (ID) and a panel may be used interchangeably. In the present disclosure, a TRP ID, a TRP-related ID, a CORESET pool index, a location of one TCI state of two TCI states corresponding to one codepoint of a field in DCI (ordinal number, first TCI state or second TCI state), and a TRP may be used interchangeably.

In the present disclosure, a panel, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, and a CORESET group may be used interchangeably.

A panel may be associated with at least one of a panel ID, a UL TCI state, a UL beam, a DL beam, a DL RS resource, and spatial relation information.

In the present disclosure, multi-TRP, a multi-TRP system, multi-TRP transmission, multi-PDSCH, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be used interchangeably. In the present disclosure, multi-TRP based on multi-DCI and one CORESET pool index (CORESETPoolIndex) value being configured for a CORESET may be used interchangeably. In the present disclosure, multi-TRP based on single DCI and at least one codepoint in a TCI field being mapped to two TCI states may be used interchangeably.

In the present disclosure, a single TRP, single DCI, a single PDCCH, multi-TRP based on single DCI, a single-TRP system, single-TRP transmission, a single PDSCH, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states, and two TCI states being activated on at least one TCI codepoint may be used interchangeably.

In the present disclosure, TRP #1 (first TRP) may correspond to CORESET pool index = 0, or may correspond to a first TCI state of two TCI states corresponding to one codepoint of a TCI field. TRP #2 (second TRP) may correspond to CORESET pool index = 1, or may correspond to a second TCI state of the two TCI states corresponding to one codepoint of the TCI field.

Note that, in the present disclosure, a signaling structure, signaling, configuration, a structure, configuration information, indication, indication information, and the like may be used interchangeably.

### (Radio Communication Method)

At least one of information related to a TRP corresponding to a serving cell and information related to a TAG corresponding to each TRP may be configured/notified to the UE from the base station.

The base station may configure at least one of information related to a TRP included in a serving cell and information related to a TAG corresponding to each TRP, for the UE, by using an RRC parameter. Alternatively, the base station may configure at least one of information related to a TRP included in a serving cell and information related to a TAG corresponding to each TRP, for the UE, by using a MAC CE. Alternatively, the base station may configure, by using an RRC parameter, information related to a TRP included in a serving cell, and may notify, by using a MAC CE, the UE of information related to a TAG corresponding to each TRP.

In consideration of a TAG to which a plurality of TRPs corresponding to a serving cell belong, the UE controls a UL transmission timing corresponding to each TRP (for example, adjusts a timing advance). The UE may control the timing advance, based on a time alignment timer corresponding to each TRP.

When a plurality of timing advance timers respectively corresponding to a plurality of TRPs are configured, the UE may judge/control operation after expiration of timing advance timer(s), based on the number of timing advance timer(s) that expire simultaneously / type of a TAG (PTAG or STAG) for which the timing advance timer(s) expire / type of a cell included in the TAG for which the timing advance timer(s) expire (for example, whether the TAG includes an SpCell).

### <First Embodiment>

A first embodiment describes control of a timing advance in a case where a plurality of (for example, two) TRPs of a serving cell belong to different TAGs. Note that the first embodiment may be suitably employed in the configuration described in Analysis 1 above. Of course, a case in which the first embodiment is employed is not limited to this.

When TAGs to which two respective TRPs of a certain serving cell belong can be separately configured, a time alignment timer may be configured/maintained for each TAG. The two TRPs (for example, TRP #0 and TRP #1) may correspond to different CORESET pool indices (for example, {0, 1}).

Which TAG (for example, PTAG/STAG or TAG ID) a plurality of TRPs of each serving cell belong to may be defined/configured based on a given condition. The given condition may be at least one of a cell type / cell index (for example, whether an SPCell or an SCell), a TRP index (for example, whether TRP #0 or TRP #1), and a combination of a cell type / cell index and a TRP index.

As configuration of a TAG to which the plurality of TRPs of each serving cell belong, at least one of Options 1-1 to 1-4 below may be applied.

### {Option 1-1}

A TAG including a TRP of a specific cell may be defined/configured as a PTAG.

For example, a TAG including TRP #0 of an SpCell for a MAC entity may be defined/configured as a PTAG. When a time alignment timer for the TAG has expired, a UE may apply given operation for PTAG.

In the present disclosure, the given operation for PTAG may be, for example, operation applied when a time alignment timer for a PTAG defined in Rel. 17 has expired. Note that the given operation for PTAG is not restrictive, and may be, for example, operation applied when a time alignment timer for a PTAG defined in Rel. 18 (or later versions) has expired.

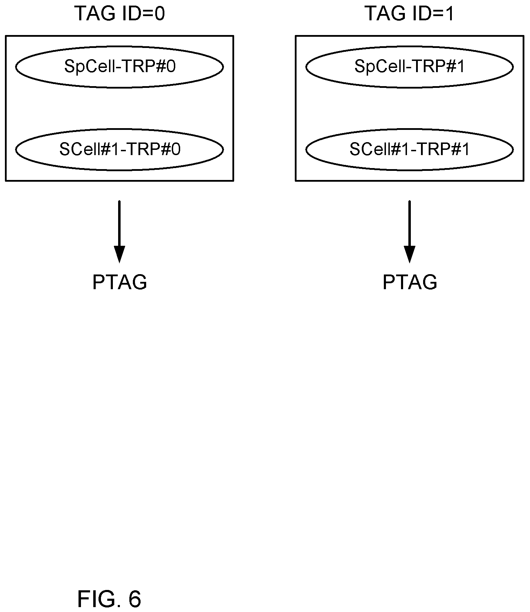

A TAG including TRP #1 of the SpCell for the MAC entity may also be defined/configured as a PTAG (see FIG. 6). When a time alignment timer for the TAG has expired, the UE may apply the given operation for PTAG.

In this case, for a certain cell group (for example, an MCG/SCG), the presence of a plurality of (for example, two) PTAGs or definition/configuration of a plurality of PTAGs may be supported. A TAG not including a TRP of the SpCell may be defined/configured as an

### STAG.

### {Option 1-2}

A TAG including a specific TRP of a specific cell may be defined/configured as a PTAG. A TAG including a TRP other than the specific TRP of the specific cell may be defined/configured as an STAG.

For example, a TAG including a TRP with a specific index of the SpCell for the MAC entity (for example, TRP #0) may be defined/configured to be a PTAG. When a time alignment timer for the TAG has expired, the UE may apply the given operation for PTAG.

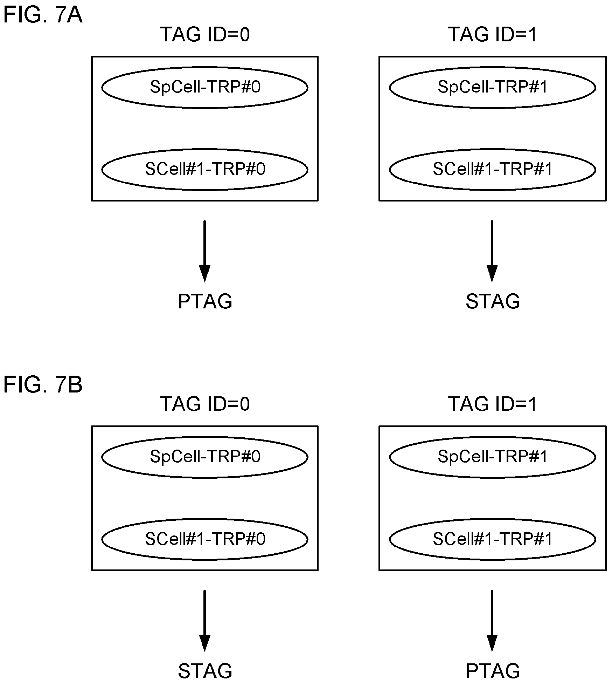

On the other hand, a TAG including a TRP with an index other than the specific index of the SpCell for the MAC entity (for example, TRP #1) may be defined/configured to be an STAG (see FIG. 7A). When a time alignment timer for the TAG has expired, the UE may apply given operation for STAG.

In the present disclosure, the given operation for STAG may be, for example, operation applied when a time alignment timer for an STAG defined in Rel. 17 has expired. Note that the given operation for STAG is not restrictive, and may be, for example, operation applied when a time alignment timer for an STAG defined in Rel. 18 (or later versions) has expired.

Note that FIG. 7A shows a case where a TAG including TRP #0 of the SpCell is defined/configured as a PTAG and where a TAG including TRP #1 of the SpCell is defined/configured as an STAG, but is not limited to this. For example, a TAG including TRP #0 of a specific cell and a TAG including TRP #1 may be defined/configured as an STAG and a PTAG, respectively (see FIG. 7B).

In this case, for a certain cell group (for example, an MCG/SCG), the presence of a single PTAG or definition/configuration of a single PTAG may be supported. A TAG not including a specific TRP of the SpCell may be defined/configured as an STAG.

### {Option 1-3}

Which TAG including which TRP of the SpCell is to be referred to as a PTAG may be configured. For example, information related to a TRP corresponding to a PTAG may be configured for / notified to the UE from the base station by using RRC / MAC CE or the like.

In this case, a restriction that allows only one of the TRPs to be configured as a PTAG may be added. Alternatively, no restriction may be provided for a TRP configurable as the PTAG, and a plurality of (for example, two) TRPs may be configurable as the PTAG.

When a certain TRP is configured as a PTAG, the UE may apply operation for PTAG (for example, given operation for PTAG after expiration of a time alignment timer). Otherwise, the UE may apply operation for STAG (for example, given operation for STAG after expiration of a time alignment timer).

### <<Variation>>

Alternatively, which TAG is to be referred to as a PTAG may be configured for the UE from the base station. For example, information related to a TAG corresponding to the PTAG may be configured for / notified to the UE from the base station by using RRC / MAC CE or the like.

In this case, a restriction that limits the number of TAGs configurable as PTAGs in each cell group (for example, an MCG/SCG) to a given number or less (for example, only one TAG) may be added.

Alternatively, no restriction may be provided for the number of TAGs configurable as PTAGs. A plurality of (for example, two) TAGs may be configurable as PTAGs.

### {Option 1-4}

When a plurality of TRPs corresponding to the SpCell belong to different TAGs, new operation may be defined/applied as operation after expiration of a time alignment timer corresponding to each TAG.

### <<Application to SpCell>>

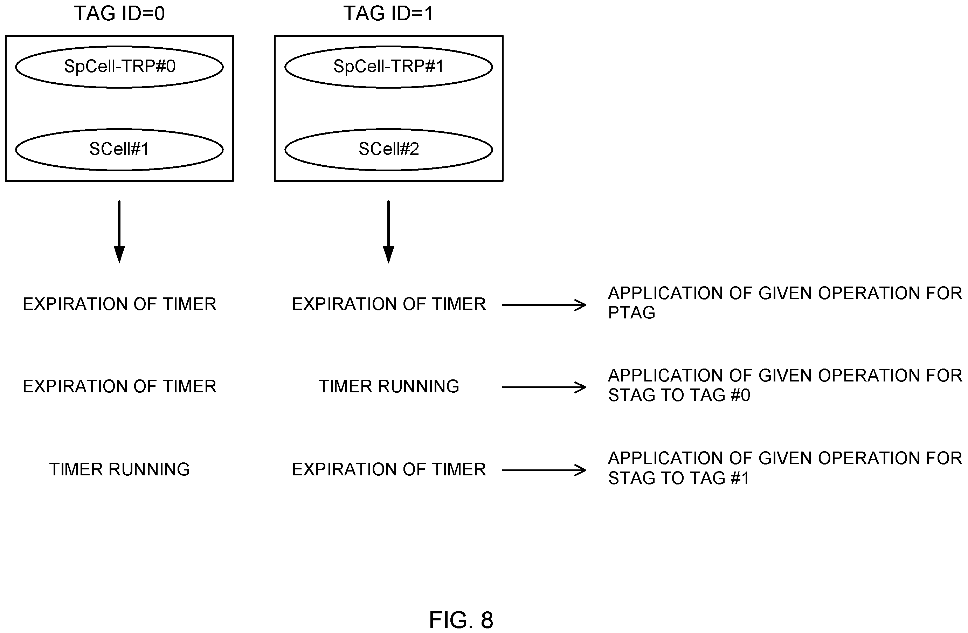

Assume a case where two respective time alignment timers are configured/applied for two TAGs including two respective TRPs of the SpCell (see FIG. 8). FIG. 8 shows a case where respective time alignment timers are separately configured for TAG #0 including TRP #0 of the SpCell and SCell #1, and TAG #1 including TRP #1 of the SpCell and SCell #2.

In this case, based on at least one of the number of timing advance timer(s) that expire simultaneously, a type of a TAG (PTAG or STAG) for which the timing advance timer(s) expire, a type of a cell included in the TAG for which the timing advance timer(s) expire (for example, whether the TAG includes an SpCell), the UE may judge/control operation after expiration of the timing advance timer(s).

Given operation for PTAG may be applied only when both a time alignment timer corresponding to TAG #0 and a time alignment timer corresponding to TAG #1 have expired. In this case, the UE may perform control so as to apply the given operation for PTAG to both of TAG #0 and TAG #1.

Note that when both of TAG #0 and TAG #1 are PTAGs, the given operation for PTAG may be applied, and when one of TAG #0 and TAG #1 is a PTAG and the other is an STAG, the given operation for PTAG and given operation for STAG may be applied to the PTAG and the STAG, respectively.

When one of the two time alignment timers has expired and the other is running, the given operation for STAG may be applied to the TAG for which the time alignment timer has expired. For example, when the time alignment timer corresponding to TAG #0 (for example, PTAG) has expired, and the time alignment timer corresponding to TAG #1 (for example, STAG) is running, the given operation for STAG may be applied to TAG #0 (for example, PTAG).

In other words, when one of the two time alignment timers has expired and the other is running, the given operation for STAG may be applied regardless of a TAG type (whether a PTAG or an STAG).

Alternatively, when a time alignment timer corresponding to one TRP has expired and a time alignment timer corresponding to another TRP is running in a serving cell, given operation for TAG (for PTAG/STAG) may not be applied to a given serving cell (for example, an SpCell).

In this case, the TRP for which the time alignment timer has expired may be assumed to be non-synchronized. Furthermore, random access procedure (for example, RACH procedure) may be initiated for synchronization.

Given operation for TAG (for PTAG/STAG) may not be applied to a specific cell (for example, an SpCell). For example, in FIG. 8, when a time alignment timer corresponding to TAG #0 has expired, and a time alignment timer corresponding to TAG #1 is running, given operation for STAG may be applied to SCell #1 and may not be applied to the SpCell. When the time alignment timer corresponding to TAG #1 has expired, and the time alignment timer corresponding to TAG #0 is running, the given operation for STAG may be applied to SCell #2 and may not be applied to the SpCell.

### <<Application to SCell>>

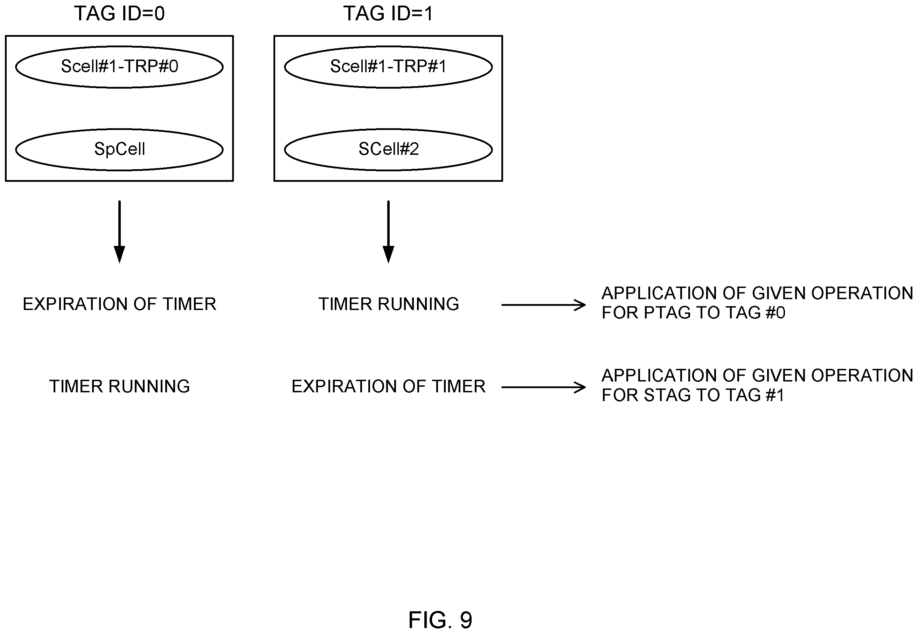

Assume, for an SCell, a case where two respective time alignment timers are configured/applied for two TAGs including two respective TRPs of the SCell (see FIG. 9). FIG. 9 shows a case where respective time alignment timers are separately configured for TAG #0 including TRP #0 of SCell #1 and the SpCell, and TAG #1 including TRP #1 of SCell #1 and SCell #2.

When one of the two time alignment timers has expired and the other is running, TAG-related operation may be controlled based on whether a specific cell (for example, an SpCell) is included in a TAG for which the time alignment timer has expired.

For example, when the SpCell is included in the TAG for which the time alignment timer has expired, given operation for PTAG may be applied. On the other hand, when the SpCell is not included in the TAG for which the time alignment timer has expired, given operation for STAG may be applied.

Alternatively, in a serving cell, when a time alignment timer corresponding to one TRP has expired and a time alignment timer corresponding to another TRP is running, given operation for TAG (for PTAG/STAG) may not be applied. In this case, the TRP for which the time alignment timer has expired may be assumed to be non-synchronized, and random access procedure (for example, RACH procedure) may be initiated for synchronization.

For example, in FIG. 9, when a time alignment timer corresponding to TAG #0 is running, and a time alignment timer corresponding to TAG #1 has expired, given operation for STAG may be applied to SCell #2 and may not be applied to SCell #1.

### {Inter-cell Scenario}

In L1/L2 inter-cell operation (for example, L1/L2 inter-cell operation), the first embodiment may be employed.

For example, the first embodiment may be employed in a case where up to M physical cell IDs (for example, PCIs) per CC are configured/applied for an activated TCI state (for example, a case of M = 2 in multi-TRP inter-cell operation using multi-DCI). For example, in Option 1-1 to Option 1-4 to be employed, the "TRP" may be used interchangeably with a "PCI."

M PCIs of the serving cell may belong to different TAGs. In this case, Option 1-1' to Option 1-4' below may be applied. M may be 2, or may be a value greater than 2.

### {Option 1-1'}

A TAG including a PCI of the SpCell for the MAC entity may be defined/configured as a PTAG. When a time alignment timer for the TAG has expired, the UE may apply given operation for PTAG. This may mean that a plurality of PTAGs are present in a cell group (for example, an MCG/SCG).

### {Option 1-2'}

A TAG including a PCI of the SpCell for the MAC entity may be defined/configured as a PTAG. When a time alignment timer for the TAG has expired, the UE may apply given operation for PTAG.

On the other hand, a TAG including another PCI (for example, additional PCI) of the SpCell for the MAC entity may be defined/configured as an STAG. When a time alignment timer for the STAG has expired, the UE may apply given operation for STAG.

### {Option 1-3'}

Which TAG including which PCI of the SpCell is to be referred to as a PTAG may be configured.

In this case, a restriction that allows only one of the PCIs (or up to N PCIs) to be configured as the PTAG may be added. Alternatively, no restriction may be provided for a PCI configurable as the PTAG, and a plurality of PCIs (for example, an arbitrary number of PCIs) may be configurable as the PTAG.

When a certain PCI is configured as a PTAG, the UE may apply operation for PTAG (for example, given operation for PTAG after expiration of a time alignment timer). Otherwise, the UE may apply operation for STAG (for example, given operation for STAG after expiration of a time alignment timer).

Which TAG is to be referred to as a PTAG may be configured for the UE from the base station. In this case, a restriction that limits the number of TAGs configurable as PTAGs in each cell group (for example, an MCG/SCG) to a given number or less (for example, only one TAG, or up to N TAGs or less) may be added.

Alternatively, no restriction may be provided for the number of TAGs configurable as PTAGs. A plurality of (for example, two or any number) TAGs may be configurable as PTAGs.

### {Option 1-4'}

New operation may be defined/applied as operation related to a TAG (for example, a PTAG/STAG) associated with a time alignment timer.

### <Application to SpCell>

Assume, for an SpCell, a case where a plurality of time alignment timers are respectively configured/applied for a plurality of TAGs respectively including a plurality of PCIs of the SpCell.

In this case, the UE may apply given operation for PTAG only when all the time alignment timers have expired.

When any one of the plurality of time alignment timers has expired while another time alignment timer is running, given operation for STAG may be applied to a TAG for which the time alignment timer has expired.

Alternatively, when a time alignment timer corresponding to one PCI has expired and a time alignment timer corresponding to another PCI is running in a serving cell, given operation for TAG (for PTAG/STAG) may not be applied to the serving cell (for example, an SPCell). In this case, the PCI for which the time alignment timer has expired may be assumed to be non-synchronized, and random access procedure (for example, RACH procedure) may be initiated for synchronization. The procedure may be applied to an SCell in a case where a plurality of PCIs of the SCell are included in a plurality of TAGs.

### <Second Embodiment>

A second embodiment describes control of a timing advance in a case where a plurality of (for example, two) TRPs of a serving cell belong to the same TAG. Note that the second embodiment may be suitably employed in the configuration described in Analysis 2 above. Of course, a case in which the second embodiment is employed is not limited to this.

When two TRPs of the serving cell belong to the same TAG, a MAC CE for TA command may be indicated for / applied to only one TRP. For example, the MAC CE for TA command may be indicated for / applied to TRP #0. A timing advance applied to TRP #0 may be referred to as TA_0.

For another TRP (for example, TRP #1), a UE may adjust a timing advance by using offset based on TA_0. A timing advance applied to TRP #1 may be referred to as TA_1. TA_1 may be defined, for example, as TA_1 = TA_0 + offset. Information related to the offset may be notified to the UE from a base station.

In this case, for the respective TRPs, a common timing advance timer may be configured/applied or separate timing advance timers may be configured/applied. The UE may adjust/control the timing advance by applying at least one of Option 2-1 to Option 2-2 below.

### {Option 2-1}

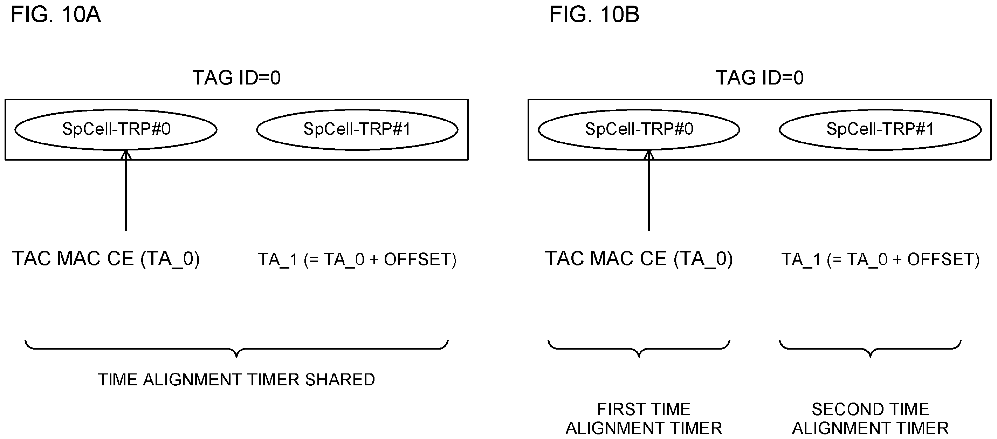

The two TRPs may share one time alignment timer (see FIG. 10A). When receiving indication of the offset (or information related to the offset), the UE may not affect the time alignment timer (Alt. 2-1-1). For example, even when receiving the information related to the offset while the time alignment timer is running, the UE may continuously apply (may not reset) the time alignment timer and may not reflect the contents of the offset. In this case, the time alignment timer may expire, and the offset may be reflected in a time alignment timer to be applied after the expiration.

Alternatively, when receiving indication of the offset (or information related to the offset), the UE may perform control so as to start/restart/reset the time alignment timer (Alt. 2-1-2). In this case, the timing advance for TRP #1 can be changed flexibly.

Note that when the common time alignment timer configured/applied for the TRPs has expired, given operation for PTAG may be applied.

### {Option 2-2}

A first time alignment timer may be applied/maintained for a TRP (for example, TRP #0) for which a TA is adjusted by the MAC CE for TA command. The first time alignment timer may be, for example, a time alignment timer supported in an existing system (for example, Rel. 17/Rel. 16).

On the other hand, a second time alignment timer may be applied/maintained for a TRP (for example, TRP #1) for which a TA is adjusted by the offset (see FIG. 10B). The second time alignment timer may be a new timer.

When receiving indication of the offset (or information related to the offset), the UE may perform control so as to start/restart/reset the new timer. When the new timer has expired, the TRP (for example, TRP #1) may be assumed to be non-synchronized. In this case, the UE may perform control so as to initiate random access procedure (for example, RACH procedure) for synchronization.

### {Inter-cell Scenario}

In L1/L2 inter-cell operation (for example, L1/L2 inter-cell operation), the second embodiment may be employed.

For example, the second embodiment may be employed in a case where up to M physical cell IDs (for example, PCIs) per CC are configured/applied for an activated TCI state (for example, a case of M = 2 in multi-TRP inter-cell operation using multi-DCI). For example, in Option 2-1 to Option 2-2 to be employed, the "TRP," "2 TRPs/PCIs," "TRP #0," and "TRP #1" may be used interchangeably with a "PCI," "plurality of (for example, two or more) PCIs," "serving PCI," and "another PCI / additional PCI," respectively.

### <Third Embodiment>

A third embodiment describes control of a timing advance in a case where a plurality of (for example, two) TRPs of a serving cell belong to the same TAG and where a MAC CE for TA command indicates a TAC for each TRP (or a TAC per TRP). Note that the third embodiment may be suitably employed in the configuration described in Analysis 3 above. Of course, a case in which the third embodiment is employed is not limited to this.

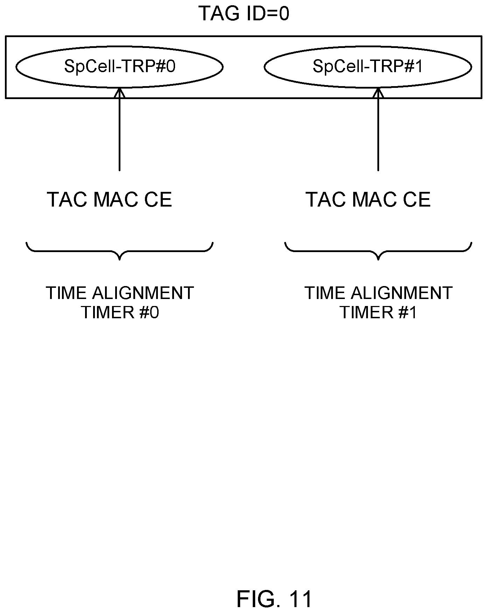

When two TRPs (for example, TRP #0 and TRP #1) of the serving cell belong to the same TAG (for example, TAG #0), a MAC CE for TAC may perform indication for each TRP TAC (for example, indicate a TAC for each TRP). The TRPs may separately maintain respective time alignment timers (see FIG. 11).

In this case, based on at least one of the number of timing advance timer(s) that expire simultaneously, a type of a TAG (PTAG or STAG) for which the timing advance timer(s) expire, a type of a cell included in the TAG for which the timing advance timer(s) expire (for example, whether the TAG includes an SpCell), the UE may judge/control operation after expiration of the timing advance timer(s).

For two time alignment timers for the two TRPs, when both of the two time alignment timers have expired, the UE may apply given operation for TAG (for example, given operation for PTAG/STAG) to TAG #0.

When one of the two time alignment timers has expired, and the other is running, the UE may apply at least one of Option 3-1 to Option 3-2 below.

### {Option 3-1}

The UE may perform control so as to apply given operation for TAG (for example, given operation for PTAG) to a TAG (for example, TAG #0) including a TRP for which the time alignment timer has expired.

In this case, even when TAG #0 includes a TRP for which the time alignment timer has not expired, the given operation for PTAG may be applied to the TAG. In other words, when a time alignment timer for at least one TRP included in a TAG has expired, the given operation for PTAG may be applied to the TAG (or a plurality of TRPs included in the TAG). Note that Option 3-1 may be applied to a case where a time alignment timer for a specific TRP of the TRPs included in the TAG has expired.

### {Option 3-2}

The UE may perform control so as not to apply given operation for TAG (for example, given operation for PTAG) to a TAG (for example, TAG #0) including a TRP for which the time alignment timer has expired. In other words, when at least one TRP included in the TAG is running, the given operation for PTAG may not be performed.

The UE needs only to perform control so as not to perform the given operation for PTAG when the TAG includes a TRP for which the time alignment timer has not expired. In this case, only a TRP for which the time alignment timer has expired may be assumed to be non-synchronized (or not to be synchronized), and RACH procedure may be initiated for synchronization of the TRP.

### {Variation}

Different options may be applied depending on a plurality of cases.

Different options may be applied to a case (Case 3-1A) where a time alignment timer for TRP #0 has expired and where a time alignment timer for TRP #1 is running and a case (Case 3-2A) where a time alignment timer for TRP #1 has expired and where a time alignment timer for TRP #0 is running. For example, Option 3-1 and Option 3-2 may be applied to Case 3-1A and Case 3-2A, respectively.

Different options may be applied to a case (Case 3-1B) where the TAG is a PTAG and a case (Case 3-2B) where the TAG is an STAG.

Different options may be applied to a case (Case 3-1C) where the serving cell with the two TRPs is an SpCell and a case (Case 3-2C) where the serving cell with the two TRPs is an SCell.

In a case where a plurality of TRPs of a plurality of cells can share the same time alignment timer, when the time alignment timer has expired, all the TRPs sharing the same time alignment timer may be assumed to be non-synchronized.

### {Inter-cell Scenario}

In L1/L2 inter-cell operation (for example, L1/L2 inter-cell operation), the third embodiment may be employed.

For example, the third embodiment may be employed in a case where up to M physical cell IDs (for example, PCIs) per CC are configured/applied for an activated TCI state (for example, a case of M = 2 in multi-TRP inter-cell operation using multi-DCI). For example, in the third embodiment to be employed, the "TRP," "2 TRPs/PCIs," "TRP #0," and "TRP #1" may be used interchangeably with a "PCI," "plurality of (for example, two or more) PCIs," "serving PCI," and "another PCI / additional PCI," respectively.

### <Fourth Embodiment>

A fourth embodiment describes control of a timing advance in a case where a plurality of (for example, two) TRPs of a serving cell belong to the same TAG and where a MAC CE for TA command indicates a TAC for each TRP. Note that the fourth embodiment may be suitably employed in the configuration described in Analysis 4 above. Of course, a case in which the fourth embodiment is employed is not limited to this.

When two TRPs of the serving cell belong to the same TAG, a MAC CE for TAC may indicate a TAC for each TRP. Each TRP may maintain a time alignment timer.

A case where a plurality of TRPs from a plurality of cells share the same TA command / same time alignment timer may be supported. In this case, a sub-TAG may be defined. One or more sub-TAGs may be included in one TAG. TRPs belonging to the same sub-TAG may share the same TA command / same time alignment timer.

The TAG with the configured sub-TAG may be limited to a TAG of a specific type (for example, a PTAG). Alternatively, the TAG with the configured sub-TAG may be configured regardless of a TAG type (for both a PTAG and an STAG).

When the sub-TAG is supported, the UE may apply at least one of Option 4-1 to Option 4-2 below.

### {Option 4-1}

A TRP belonging to the sub-TAG may be determined based on a TRP index.

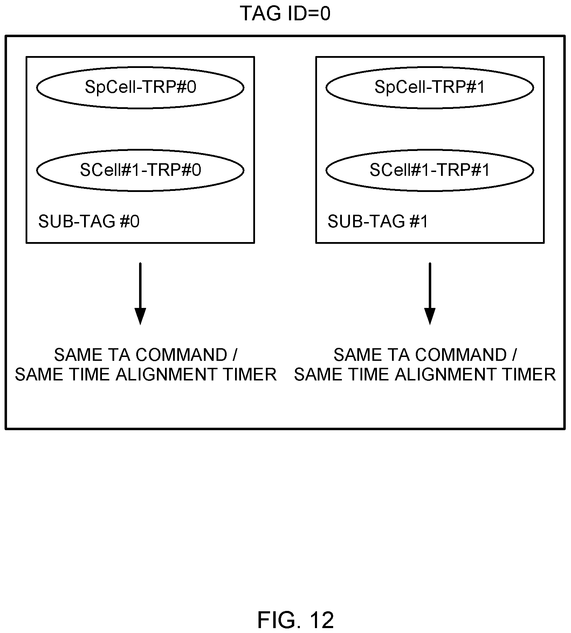

For example, TRPs #0 of all the serving cells in the same TAG may share the same TA command / same time alignment timer, and these TRPs #0 may belong to the same sub-TAG. TRPs #1 of all the serving cells in the same TAG may share the same TA command / same time alignment timer, and these TRPs #1 may belong to the same sub-TAG (see FIG. 12). FIG. 12 may correspond to default configuration.

With respect to serving cells without configuration of multi-TRP (or a plurality of CORESET pool indices), by default, the serving cells may share the same TA command / same time alignment timer as that of a specific TRP (for example, TRP #0) and may belong to the same TAG as that for the specific TRP (for example, TRP #0).

### {Option 4-2}

Which TRPs share the same TA command / same time alignment timer may be configured for the UE from a base station by using RRC / MAC CE. Which TRP belongs to which sub-TAG may be configured for the UE from the base station by using the RRC / MAC CE.

With respect to serving cells without configuration of multi-TRP, the serving cells may share the same TA command / same time alignment timer capable of being configured with a TRP, and may belong to a TAG capable of being configured with a sub-TAG.

### {Inter-cell Scenario}

In L1/L2 inter-cell operation (for example, L1/L2 inter-cell operation), the fourth embodiment may be employed.

For example, the fourth embodiment may be employed in a case where up to M physical cell IDs (for example, PCIs) per CC are configured/applied for an activated TCI state (for example, a case of M = 2 in multi-TRP inter-cell operation using multi-DCI). For example, in the fourth embodiment to be employed, the "TRP," "2 TRPs/PCIs," "TRP #0," "TRP #1," and "M-TRP being not configured," may be used interchangeably with a "PCI," "plurality of (for example, two or more) PCIs," "serving PCI," "another PCI / additional PCI," and "plurality of PCIs being not configured (or inter-cell operation being not configured)" or "only one PCI being configured," respectively.

### <UE Capability Information>

In the first to fourth embodiments above, the following UE capabilities may be configured. Note that the following UE capabilities may each be used interchangeably with a parameter (for example, a higher layer parameter) configured for the UE by a network (for example, the base station).

UE capability information related to whether the UE supports different TAs for two TRPs of a serving cell may be defined.

UE capability information related to the maximum number of different TAs supported in all the serving cells may be defined.

The first to fourth embodiments may be employed in the UE that supports/reports at least one of the UE capabilities described above. Alternatively, the first to fourth embodiments may be employed in the UE configured from the network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

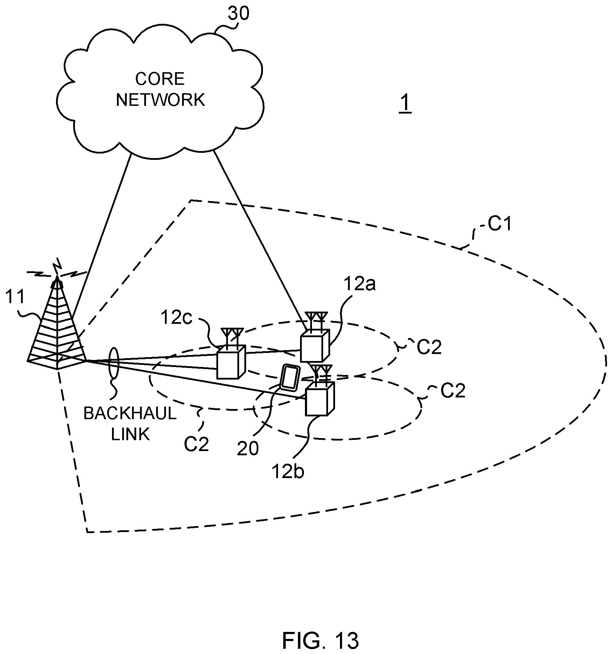

FIG. 13 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be used interchangeably with "DL data," and the PUSCH may be used interchangeably with "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

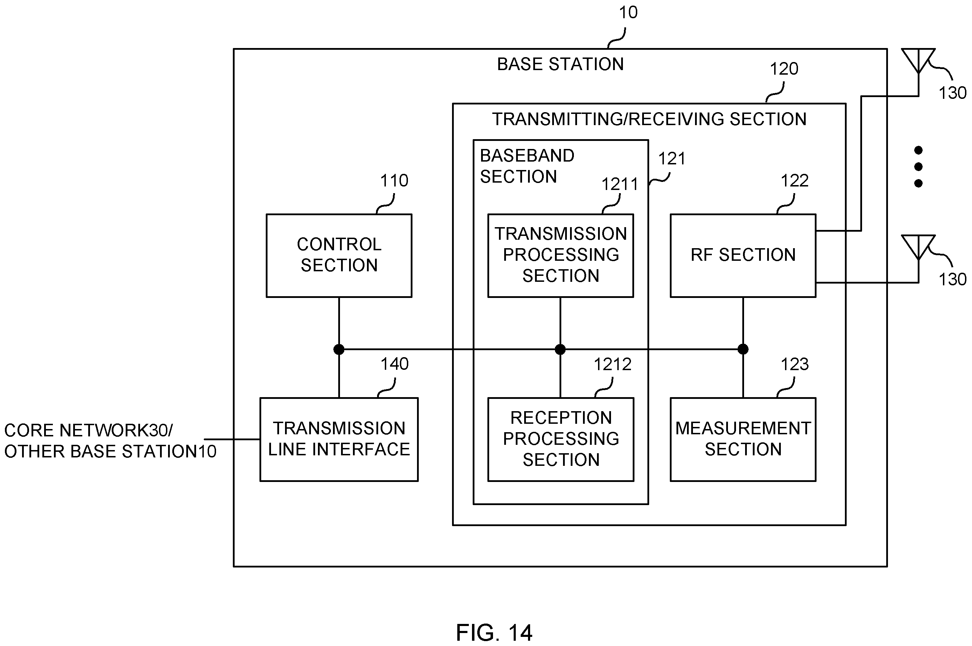

FIG. 14 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information related to timing advance groups corresponding to a plurality of transmission/reception points of a specific cell (for example, an SpCell). When the timing advance groups corresponding to the plurality of transmission/reception points are configurable separately, the control section 110 may control reception, based on a timing advance per transmission/reception point. The control section 110 may judge a timing advance group serving as a primary timing advance group, based on at least one of a cell type and a transmission/reception point index belonging to each timing advance.

The transmitting/receiving section 120 may transmit information related to timing advance groups corresponding to a plurality of transmission/reception points of a specific cell (for example, an SpCell). When the plurality of transmission/reception points belong to a same timing advance group, the control section 110 may indicate a timing advance command corresponding to only one transmission/reception point or a timing advance command corresponding to a plurality of transmission/reception points, and may control respective timing advances for the plurality of transmission/reception points.

### (User Terminal)

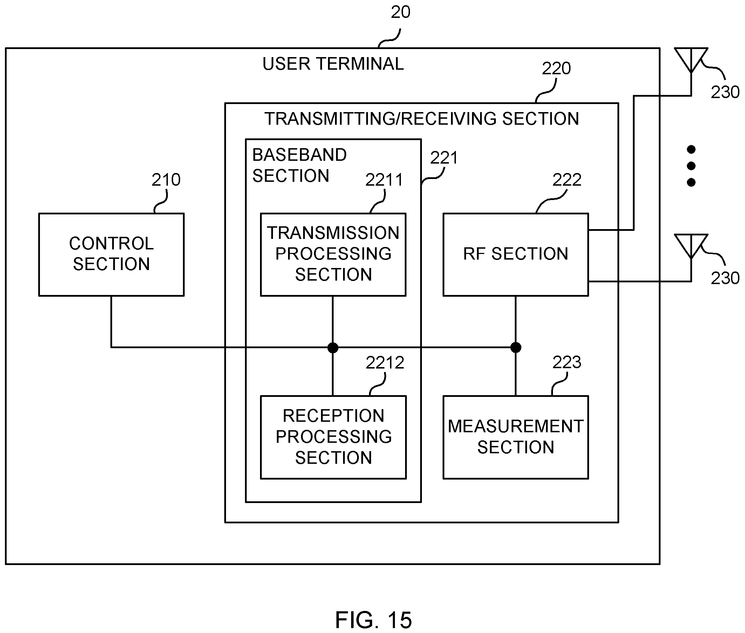

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to timing advance groups corresponding to a plurality of transmission/reception points of a specific cell. When the timing advance groups corresponding to the plurality of transmission/reception points are configurable separately, the control section 210 may control a timing advance per transmission/reception point. The control section 210 may judge a timing advance group serving as a primary timing advance group, based on at least one of a cell type and a transmission/reception point index belonging to each timing advance.

The control section 210 may judge that a timing advance group including a transmission/reception point of the specific cell is the primary timing advance group. Alternatively, the control section 210 may judge that a timing advance group including a transmission/reception point having a specific index of the specific cell is the primary timing advance group. The control section 210 may perform, based on the number of timing advance timer(s) that expire simultaneously from among a plurality of timing advance timers respectively corresponding to the plurality of transmission/reception points, control so as to change operation after expiration of the timing advance timer(s).

The transmitting/receiving section 220 may receive information related to timing advance groups corresponding to a plurality of transmission/reception points of a specific cell. When the plurality of transmission/reception points belong to a same timing advance group, the control section 210 may control respective timing advances for the plurality of transmission/reception points, based on a timing advance command corresponding to only one transmission/reception point or a timing advance command corresponding to a plurality of transmission/reception points.

The control section 210 may apply one shared time alignment timer to the plurality of TRPs. When a timing advance command is indicated for each of the plurality of transmission/reception points, the control section 210 may perform, based on the number of timing advance timers that expire simultaneously from among a plurality of timing advance timers respectively corresponding to the plurality of transmission/reception points, control so as to change operation after expiration of the timing advance timer(s).

When a timing advance command is indicated for each of the plurality of transmission/reception points, one or more sub-timing advance groups may be configured in the timing advance command, and a same timing advance command and a same timing advance timer may be applied to transmission/reception points included in a same sub-timing advance group.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

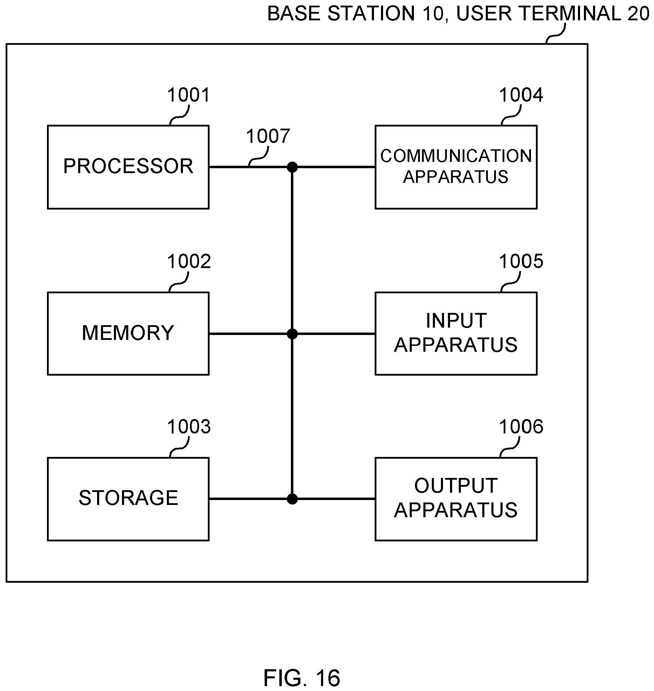

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be used interchangeably. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be used interchangeably. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be used interchangeably.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be used interchangeably with a TTI having a time length exceeding 1 ms, and a short TTI (for example, a shortened TTI and so on) may be used interchangeably with a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be used broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

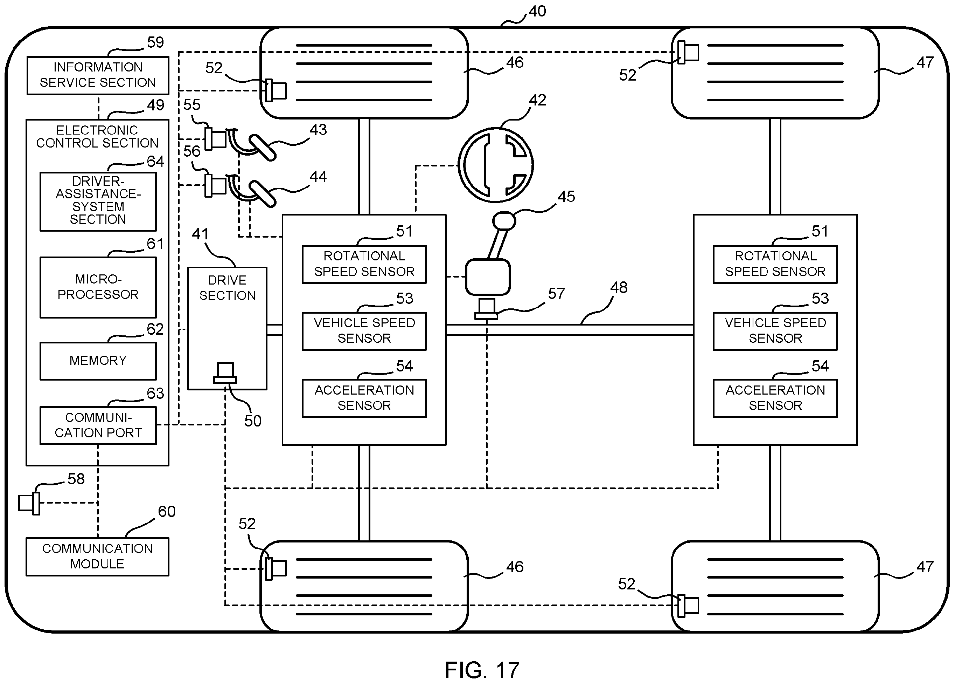

FIG. 17 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the drive section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be used interchangeably with a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be used interchangeably with the words corresponding to the terminal-to-terminal communication (for example, "sidelink"). For example, an uplink channel, a downlink channel and so on may be used interchangeably with a sidelink channel.

Likewise, the user terminal in the present disclosure may be used interchangeably with base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be used interchangeably with "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be used interchangeably with "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "coupled," and so on may be interpreted in a similar manner to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information related to timing advance groups corresponding to a plurality of transmission/reception points of a specific cell; and
a control section that, when the plurality of transmission/reception points belong to a same timing advance group, controls respective timing advances for the plurality of transmission/reception points, based on a timing advance command corresponding to only one transmission/reception point or a timing advance command corresponding to a plurality of transmission/reception points.

2. The terminal according to claim 1, wherein
the control section applies one shared time alignment timer to the plurality of TRPs.

3. The terminal according to claim 1 or 2, wherein
when a timing advance command is indicated for each of the plurality of transmission/reception points, the control section changes, based on the number of timing advance timers that expire simultaneously from among a plurality of timing advance timers respectively corresponding to the plurality of transmission/reception points, operation after expiration of the timing advance timers.

4. The terminal according to any one of claims 1 to 3, wherein
when a timing advance command is indicated for each of the plurality of transmission/reception points, one or more sub-timing advance groups are configured in the timing advance command, and a same timing advance command and a same timing alignment timer are applied to transmission/reception points included in a same sub-timing advance group.

5. A radio communication method for a terminal, the radio communication method comprising:
receiving information related to timing advance groups corresponding to a plurality of transmission/reception points of a specific cell; and
controlling, when the plurality of transmission/reception points belong to a same timing advance group, respective timing advances for the plurality of transmission/reception points, based on a timing advance command corresponding to only one transmission/reception point or a timing advance command corresponding to a plurality of transmission/reception points.

6. A base station comprising:
a transmitting section that transmits information related to timing advance groups corresponding to a plurality of transmission/reception points of a specific cell; and
a control section that, when the plurality of transmission/reception points belong to a same timing advance group, indicates a timing advance command corresponding to only one transmission/reception point or a timing advance command corresponding to a plurality of transmission/reception points and controls respective timing advances for the plurality of transmission/reception points.
